# FASCICULE DE BREVET EUROPEEN

(11) **EP 1 780 102 B1**
(45) Date de publication et mention de la délivrance du brevet: **07.01.2009**
(21) Numéro de dépôt: 06301073.0
(22) Date de dépôt: 20.10.2006
(51) Int. Cl.: B62D 21/15

(54) **Structure avant d'un véhicule automobile équipée de moyens pour empêcher l'intrusion d'une roue dans l'habitacle en cas de choc frontal**
Vorderbau für ein Kraftfahrzeug mit einer Einrichtung zum Schutz gegen das Eindringen eines Rades in die Fahrgastzelle bei einem Frontalaufprall
Front structure of a motor vehicle with means to prevent the intrusion of a wheel into the passenger compartment in case of frontal impact

(30) Priorité: 27.10.2005 FR 0510980
(43) Date de publication de la demande: 02.05.2007
(73) Titulaire: RENAULT S.A.S., 92100 Boulogne Billancourt (FR)
(72) Inventeur: Vitry, Bernard, 78990 Elancourt (FR)
(74) Mandataire: Rougemont, Bernard

(56) Documents cités:
- FR-A- 2 789 031
- GR-A- 98 100 256
- US-A1- 2004 182 628
- PATENT ABSTRACTS OF JAPAN vol. 2003, no. 04, 2 avril 2003 (2003-04-02) -& JP 2002 362409 A (NISSAN MOTOR CO LTD), 18 décembre 2002 (2002-12-18)
- PATENT ABSTRACTS OF JAPAN vol. 1997, no. 03, 31 mars 1997 (1997-03-31) -& JP 08 310444 A (HONDA MOTOR CO LTD), 26 novembre 1996 (1996-11-26)

## Description

La présente invention concerne une structure de la partie avant d'un véhicule automobile assurant une sécurité améliorée pour le ou les occupants du véhicule en cas de choc frontal. En cas de choc frontal, notamment dans le cas d'un véhicule automobile présentant un porte à faux avant très réduit (faible distance entre l'avant du véhicule et les roues avant), au moins l'une des deux roues avant, poussée vers l'arrière sous l'effet du choc, risque de faire intrusion dans l'habitacle et constituer ainsi un danger pour les occupants.

Le but de l'invention est de limiter le risque d'intrusion d'une roue à l'intérieur de l'habitacle en cas de choc frontal du véhicule.

L'invention concerne ainsi une structure de la partie avant d'un véhicule automobile, comportant une traverse supportant la crémaillère de direction qui comporte à chacune de ses extrémités une biellette reliée de façon articulée à une roue avant du véhicule.

Une telle structure est décrite dans le document JP 2002 362 409 A.

Suivant l'invention, cette structure de la partie avant d'un véhicule automobile est caractérisée en ce qu'elle comprend des moyens de guidage du déplacement de la crémaillère vers l'arrière de manière à agir sur les biellettes permettant de guider le déplacement de la crémaillère selon un trajet oblique dirigé vers l'arrière et vers le côté du véhicule opposé au poste de conduite, de telle sorte qu'en cas de choc frontal du véhicule, l'arrière de la roue se trouvant du côté d'un poste de conduite de véhicule se déplace vers l'extérieur du véhicule.

Ainsi, en cas de choc frontal, la biellette tire sur la roue correspondante en la faisant pivoter de telle sorte qu'elle se dégage du passage de roue et ne risque pas de faire intrusion à l'intérieur de l'habitacle du véhicule.

Avantageusement, lesdits moyens de guidage comprennent des moyens pour guider le déplacement de l'extrémité de la biellette opposée à la roue selon un trajet oblique dirigé vers l'arrière et vers le côté du véhicule opposé au poste de conduite.

Ce trajet oblique permet de déplacer le point d'articulation de la biellette et de faire pivoter la roue.

Dans une version de l'invention, lesdits moyens de guidage sont commandés par un actionneur qui est lui-même déclenché par un capteur de choc.

Ainsi, le déplacement de la biellette et de ce fait, le pivotement de la roue, ont lieu dès le début du choc du véhicule.

Selon une version préférée de l'invention, la crémaillère est fixée sur la traverse par les moyens permettant de guider le déplacement de la crémaillère selon un trajet oblique dirigé vers l'arrière et vers le côté du véhicule opposé au poste de conduite.

Ainsi, en cas de choc frontal du véhicule, la crémaillère se déplace selon un trajet oblique qui entraîne la biellette qui de ce fait, fait pivoter la roue dans le sens souhaité.

De préférence, lesdits moyens de guidage comprennent des évidements allongés réalisés dans ladite traverse dans chacun desquels est engagé un élément de fixation de la crémaillère, lesdits évidements allongés étant orientés suivant ledit trajet oblique.

Avantageusement, chacun desdits éléments de fixation est maintenu dans l'évidement allongé correspondant par des moyens pouvant céder en cas de choc pour libérer le déplacement dudit élément de fixation dans l'évidement allongé correspondant.

D'autres particularités et avantages de l'invention apparaîtront encore tout au long de la description ci-après.

Aux dessins annexés donnés à titre d'exemples non limitatifs:
- la figure 1 est une vue en plan montrant partiellement la structure avant d'un véhicule automobile selon l'invention dont le poste de direction est situé à gauche,
- la figure 2 est une vue analogue à la figure 1, illustrant le cas d'un choc frontal du véhicule,
- la figure 3 est une vue en perspective à échelle agrandie montrant le détail d'une fixation de la crémaillère dans un évidement allongé de la traverse, vue de dessus,
- la figure 4 est une vue analogue à la figure 3, la traverse étant vue de dessous.

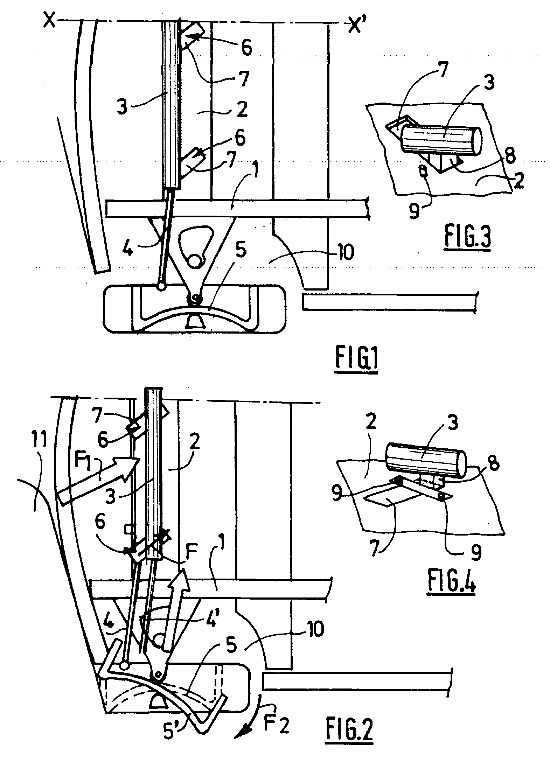

La figure 1 représente partiellement la structure de la partie avant d'un véhicule automobile, comportant deux longerons 1 symétriques par rapport à l'axe longitudinal X-X' et entre lesquels s'étend une traverse 2 supportant la crémaillère de direction 3 laquelle s'étend selon une direction sensiblement transversale du véhicule. Cette crémaillère 3 comporte à chacune de ses extrémités une biellette 4 reliée de façon articulée à une roue avant 5 du véhicule.

Dans le mode de réalisation décrit ici, le poste de conduite du véhicule est situé à gauche.

Conformément à l'invention, la structure comprend des moyens coopérant avec chacune des biellettes 4 pour faire pivoter la roue 5 correspondante, de telle sorte qu'en cas de choc frontal du véhicule, l'arrière de la roue 5 gauche, c'est-à-dire située du côté poste de conduite, se déplace vers l'extérieur du véhicule, comme montré par la figure 2.

A cet effet, des moyens sont prévus pour guider le déplacement de l'extrémité de la biellette opposée à la roue 5 selon un trajet oblique (voir flèche F sur la figure 2) dirigé vers l'arrière et vers le côté du véhicule opposé au poste de conduite, c'est-à-dire vers le côté droit dans l'exemple décrit.

Les moyens ci-dessus peuvent être commandés par un actionneur qui est lui-même déclenché par un ou plusieurs capteurs de choc placés à l'avant du véhicule.

Dans l'exemple représenté sur la figure 1, la crémaillère 3 est fixée sur la traverse 2 par des moyens de guidage 6 permettant de guider le déplacement de la crémaillère 3 selon le trajet oblique F mentionné ci-dessus.

Ces moyens de guidage comprennent (voir figures 3 et 4) des évidements allongés 7 réalisés dans la traverse 2 dans chacun desquels est engagé un élément de fixation 8 de la crémaillère 3. Ces évidements allongés 7 sont orientés suivant le trajet oblique F précité.

Les figures 3 et 4 montrent que chacun des éléments de fixation 8 est maintenu dans l'évidement allongé 7 correspondant par des moyens tels que des doigts 9 pouvant céder en cas de choc pour libérer le déplacement de l'élément de fixation 8 dans l'évidement allongé 7 correspondant.

La longueur des évidements allongés 7 est déterminée pour permettre de guider le déplacement de la crémaillère 3 suivant un trajet F suffisant pour que la biellette 4 entraînée dans ce déplacement fasse pivoter la roue 5 gauche afin que l'arrière de celle-ci se dégage totalement du passage de roue.

On va maintenant décrire le fonctionnement du dispositif ci-dessus.

En cas de choc frontal du véhicule contre un objet 11 (voir figure 2), une force F1 s'applique sur la crémaillère 3. Cette force entraîne la rupture des doigts 9 qui relient les éléments de fixation 8 de la crémaillère 3 à la traverse 2. La crémaillère 3 se déplace alors dans les évidements obliques 7. Ainsi, en position finale, la crémaillère est décalée vers l'arrière et vers la droite et s'étend transversalement. La biellette 4 gauche de ce fait se déplace jusqu'à la position 4' représentée sur la figure 2, ce qui fait pivoter la roue 5 gauche vers l'extérieur comme montré par la flèche F2, jusqu'à la position 5' dans laquelle cette roue est complètement dégagée du passage de roue 11. L'arrière de la roue droite s'est quant à lui déplacé vers l'intérieur du véhicule.

Lors de la poursuite de la déformation de la structure avant sous l'effet du choc, la roue 5 gauche du fait de sa position pivotée vers l'extérieur du passage de roue 11, ne risque pas de faire intrusion dans l'habitacle du véhicule et causer des dommages au conducteur.

Dans le cas d'un véhicule à direction à droite, la crémaillère se déplace vers la gauche du véhicule de manière que l'arrière de la roue droite pivote vers l'extérieur. Les évidements 7 sont alors orientés en sens inverse.

## Revendications

1. Structure de la partie avant d'un véhicule automobile, comportant une traverse (2) supportant la crémaillère de direction (3) qui comporte à chacune de ses extrémités une biellette (4) reliée de façon articulée à une roue avant (5) du véhicule, **caractérisée en ce qu'**elle comprend des moyens de guidage (6) du déplacement de la crémaillère (3) vers l'arrière de manière à agir sur les biellettes (4), permettant de guider le déplacement de la crémaillère (3) selon un trajet oblique (F) dirigé vers l'arrière et vers le côté du véhicule opposé au poste de conduite de telle sorte qu'en cas de choc frontal du véhicule, l'arrière de la roue (5) se trouvant du côté d'un poste de conduite du véhicule se déplace vers l'extérieur du véhicule.

2. Structure selon la revendication 1, **caractérisée en ce que** lesdits moyens de guidage (6) comprennent des moyens (7) pour guider le déplacement de l'extrémité de la biellette (4) opposée à la roue (5) selon un trajet oblique (F) dirigé vers l'arrière et vers le côté du véhicule opposé au poste de conduite.

3. Structure selon l'une des revendications 1 ou 2, **caractérisée en ce que** lesdits moyens de guidage (6) sont commandés par un actionneur qui est lui-même déclenché par un capteur de choc.

4. Structure selon l'une des revendications 1 à 3, **caractérisée en ce que** la crémaillère (3) est fixée sur la traverse (2) par les moyens (6) permettant de guider le déplacement de la crémaillère (3) selon un trajet oblique (F) dirigé vers l'arrière et vers le côté du véhicule opposé au poste de conduite.

5. Structure selon la revendication 4, **caractérisée en ce que** lesdits moyens de guidage (6) comprennent des évidements allongés (7) réalisés dans ladite traverse (2) dans chacun desquels est engagé un élément de fixation (8) de la crémaillère, lesdits évidements allongés (7) étant orientés suivant ledit trajet oblique (F).

6. Structure selon la revendication 5, **caractérisée en ce que** chacun desdits éléments de fixation (8) est maintenu dans l'évidement allongé (7) correspondant par des moyens (9) pouvant céder en cas de choc pour libérer le déplacement dudit élément de fixation (8) dans l'évidement allongé (7) correspondant.

7. Structure selon l'une des revendications 5 ou 6, **caractérisée en ce que** la longueur desdits évidements allongés est déterminée pour permettre de guider le déplacement de la crémaillère (3) suivant un trajet suffisant pour que la biellette (4) entraînée dans ce déplacement fasse pivoter la roue (5) située du côté du poste de conduite afin que l'arrière de celle-ci se dégage totalement du passage de roue (10).

## Claims

1. Structure for the front part of a motor vehicle, comprising a crossmember (2) supporting the steering rack (3) which at each of its ends comprises a link rod (4) connected in an articulated manner to a front wheel (5) of the vehicle, **characterized in that** it comprises means (6) for guiding the movement of the rack (3) towards the rear so as to act on the link rods (4), making it possible to guide the movement of the rack (3) along an oblique path (F) directed towards the rear and towards that side of the vehicle opposed to the driver's position, such that, in the event of a frontal impact of the vehicle, the rear of the wheel (5) situated on the same side as a driver's position of the vehicle moves towards the outside of the vehicle.

2. Structure according to Claim 1, **characterized in that** the said guide means (6) comprise means (7) for guiding the movement of that end of the link rod (4) opposed to the wheel (5) along an oblique path (F) directed towards the rear and towards that side of the vehicle opposed to the driver's position.

3. Structure according to either of Claims 1 and 2, **characterized in that** the said guide means (6) are controlled by an actuator which is itself triggered by an impact sensor.

4. Structure according to one of Claims 1 to 3, **characterized in that** the rack (3) is fastened to the crossmember (2) by the means (6) used to guide the movement of the rack (3) along an oblique path (F) directed towards the rear and towards that side of the vehicle opposed to the driver's position.

5. Structure according to Claim 4, **characterized in that** the said guide means (6) comprise elongate cutouts (7) which are formed in the said crossmember (2) and in each of which an element (8) for fastening the rack is engaged, the said elongate cutouts (7) being oriented along the said oblique path (F).

6. Structure according to Claim 5, **characterized in that** each of the said fastening elements (8) is retained in the corresponding elongate cutout (7) by means (9) which are able to yield in the event of an impact so that the said fastening element (8) is free to move in the corresponding elongate cutout (7).

7. Structure according to either of Claims 5 and 6, **characterized in that** the length of the said elongate cutouts is determined so as to make it possible to guide the movement of the rack (3) along a path which is sufficient for the link rod (4) driven along in this movement to pivot the wheel (5) situated on the same side as the driver's position in order that the rear of this wheel comes completely clear of the wheel arch (10).

## Patentansprüche

1. Vorderbau eines Kraftfahrzeugs, mit einem Querträger (2), der die Lenkzahnstange (3) unterstützt, die an jedem ihrer Enden einen Schwingarm (4) aufweist, der schwenkbar mit einem Vorderrad (5) des Fahrzeugs verbunden ist, **dadurch gekennzeichnet, dass** er Führungsmittel (6) für die Verlagerung der Zahnstange (3) nach hinten aufweist, derart, dass auf die Schwingarme (4) eingewirkt wird, was ermöglicht, die Verlagerung der Zahnstange (3) längs einer schrägen Bahn (F) zu führen, die nach hinten und zu der Seite des Fahrzeugs gegenüber dem Führerstand gerichtet ist, derart, dass im Fall eines Frontalaufpralls des Fahrzeugs die Rückseite des Rades (5), die sich auf der Seite einer Lenksäule des Fahrzeugs befindet, in Richtung aus dem Fahrzeug verlagert.

2. Aufbau nach Anspruch 1, **dadurch gekennzeichnet, dass** die Führungsmittel (6) Mittel (7) enthalten, um die Verlagerung des Endes des Schwingarms (4) gegenüber dem Rad (5) längs einer schrägen Bahn (F) zu führen, die nach hinten und zu der Seite des Fahrzeugs gegenüber dem Führerstand gerichtet ist.

3. Aufbau nach einem der Ansprüche 1 oder 2, **dadurch gekennzeichnet, dass** die Führungsmittel (6) durch einen Aktor gesteuert werden, der seinerseits durch einen Stoßsensor ausgelöst wird.

4. Aufbau nach einem der Ansprüche 1 bis 3, **dadurch gekennzeichnet, dass** die Zahnstange (3) an dem Querträger (2) durch Mittel (6) befestigt ist, die die Führung der Verlagerung der Zahnstange (3) längs einer schrägen Bahn (F) ermöglichen, die nach hinten und zu der Seite des Fahrzeugs gegenüber dem Führerstand gerichtet ist.

5. Aufbau nach Anspruch 4, **dadurch gekennzeichnet, dass** die Führungsmittel (6) längliche Aussparungen (7) aufweisen, die in dem Querträger (2) verwirklicht sind, wobei in jeder von ihnen ein Befestigungselement (8) der Zahnstange in Eingriff ist, wobei die länglichen Aussparungen (7) längs der schrägen Bahn (F) orientiert sind.

6. Aufbau nach Anspruch 5, **dadurch gekennzeichnet, dass** jedes der Befestigungselemente (8) in der entsprechenden länglichen Aussparung (7) durch Mittel (9) gehalten wird, die im Fall eines Stoßes nachgeben können, um die Verlagerung des Befestigungselements (8) in der entsprechenden länglichen Aussparung (7) freizugeben.

7. Aufbau nach einem der Ansprüche 5 oder 6, **dadurch gekennzeichnet, dass** die Länge der länglichen Aussparungen so bestimmt ist, dass die Führung der Verlagerung der Zahnstange (3) längs einer Bahn ermöglicht wird, die ausreicht, damit der bei dieser Verlagerung mitgenommene Schwingarm (4) bewirkt, dass das auf der Seite des Führerstands befindliche Rad (5) schwenkt, damit dessen Rückseite sich vollständig von dem Radkasten (10) löst.
